# EUROPEAN PATENT SPECIFICATION

(11) **EP 1 908 798 B1**
(45) Date of publication and mention of the grant of the patent: **21.08.2013**
(21) Application number: 06780729.7
(22) Date of filing: 03.07.2006
(51) Int. Cl.: C08L 57/00, C08L 31/04, C09D 5/02, C09D 7/12, C09D 131/04, C09D 157/00, C09J 131/04, C09J 157/00

(54) **AQUEOUS LIQUID DISPERSION, METHOD FOR PRODUCING SAME, COMPOSITION, ADHESIVE, AND COATING MATERIAL**
DISPERSION IN WÄSSRIGER FLÜSSIGKEIT, HERSTELLUNGSVERFAHREN DAFÜR, ZUSAMMENSETZUNG, KLEBSTOFF UND BESCHICHTUNGSMATERIAL
DISPERSION LIQUIDE AQUEUSE, PROCEDE POUR PRODUIRE CELLE-CI, UNE COMPOSITION, UN ADHESIF ET UN MATERIAU DE REVETEMENT

(30) Priority: 13.07.2005 JP 2005203788; 10.02.2006 JP 2006033281
(43) Date of publication of application: 09.04.2008
(73) Proprietor: KURARAY CO., LTD., Kurashiki-shi, Okayama 710-8622 (JP)
(72) Inventor: NAKAMAE, Masato, c/o Kuraray Co., Ltd., Kurashiki-shi, Okayama 7108622 (JP); MAKI, Hideki, c/o Kuraray Co., Ltd., Kurashiki-shi, Okayama 7108622 (JP)
(74) Representative: Alcock, David
(86) International application number: PCT/JP2006/313225
(87) International publication number: WO 2007/007578

(56) References cited:
- JP-A- 06 107 956
- JP-A- 09 124 874
- JP-A- 2000 109 630
- JP-A- 2000 290 320
- JP-A- 2002 371 164
- JP-A- 2002 371 165
- JP-A- 2003 268 185
- US-A- 5 476 896
- DATABASE CA [Online] CHEMICAL ABSTRACTS SERVICE, COLUMBUS, OHIO, US; 12 April 2001 (2001-04-12), TANIMOTO, SEIJI ET AL: "Aqueous acrylic emulsion compositions with good viscosity storage stability for boiling water-resistant adhesives, coatings, binders, and processing agents" XP002569836 retrieved from STN Database accession no. 134:238587 -& JP 2001 072820 A (KURARAY CO., LTD., JAPAN) 21 March 2001 (2001-03-21)

## Description

### Technical Field

The present invention relates to an aqueous liquid dispersion, a method for producing the same, as well as a composition, an adhesive and a coating material. More particularly, the present invention relates to an aqueous liquid dispersion composed of polymer particles comprising a specific crosslinkable unsaturated monomer unit, a vinyl alcohol copolymer having an ethylene unit and a carboxyl group-containing monomer unit and a crosslinking agent, and a method for producing the same, as well as a composition, an adhesive and a coating material. The aqueous liquid dispersion and the composition of the present invention are excellent in water resistance, especially boiling water resistance and shelf viscosity stability (have a long pot life), and thus are suitable for an adhesive and a coating material.

### Background Art

Polyvinyl alcohol (hereinafter, sometimes abbreviated as PVA) is widely used as a protective colloid for emulsion polymerization of ethylenically unsaturated monomers, particularly vinyl ester monomers typified by vinyl acetate. Vinyl ester aqueous emulsions obtained by emulsion polymerization using this as the protective colloid are widely used in various fields of various adhesives for paper, woodworking and plastics, various binders for impregnated paper and nonwoven products, admixtures, placing joint materials, paints, paper coating and textile processing. Such an aqueous emulsion exerts its effect on the above various usages under a dry condition by forming a film having a firm mechanical strength, but is problematic under a high humidity or water-wet condition in that PVA is easily eluted or absorbs water to remarkably diminish the mechanical strength because PVA forming a continuous phase in the film is water soluble.

From these circumstances, various procedures have been attempted in order to enhance water resistance and hot water resistance of the film obtained from the emulsion using PVA as a dispersant. As their representative, a method for combining a polyvalent isocyanate compound with the emulsion using PVA as the dispersant is known. In this method, the remarkable water resistance is realized because isocyanate is firmly reacted with a hydroxyl group in PVA, but at the same time, since isocyanate is reacted with water, the pot life of the composition is very short and its workability is problematic.

Various adhesives using the aqueous emulsion using a PVA polymer as the dispersant have been proposed. For example, the adhesives composed of the aqueous emulsion using PVA as the dispersant and aliphatic aldehyde such as glyoxal (Patent Document 1), the adhesives composed of PVA, the aqueous emulsion, a crosslinking agent, an amino compound such as chitosan (Patent Document 2), the adhesives composed of PVA, the aqueous emulsion, the crosslinking agent such as aluminum chloride and a polyvalent isocyanate compound (Patent Document 3), the adhesives mainly composed of the emulsion using PVA having an α-olefin unit having 4 or less carbon atoms as the dispersant (Patent Document 4), the composition composed of the emulsion obtained by emulsion polymerization in the presence of carboxyl group-modified PVA and a reaction product of polyamide and an epoxy group-containing compound (Patent Document 5), and the composition composed of the aqueous emulsion using a PVA polymer having an α-olefin unit and a PVA polymer having a carboxyl group in a molecule as the dispersants and a water resistant additive selected from epoxy compounds, amino group-containing aqueous resins, aluminum compounds and titanium compounds (Patent Document 6) are known.
Patent Document 1: Japanese Published Unexamined Patent Application No. S55-94937
Patent Document 2: Japanese Published Unexamined Patent Application No. H3-45678
Patent Document 3: Japanese Published Examined Patent Application No. S57-16150
Patent Document 4: Japanese Patent No. 3466316
Patent Document 5: Japanese Patent No. 3311086
Patent Document 6: Japanese Published Unexamined Patent Application No. 2001-40231

However, although the water resistance is improved in - the aforementioned adhesives, the boiling water resistance is not necessarily sufficient. In the adhesive described in Patent Document 3, the shelf viscosity stability is poor (the pot life is short) and its workability is problematic. Therefore, it is not an exaggeration to say that at the present technical level, there is no aqueous liquid dispersion, composition, adhesive and coating material which balance the high water resistance, especially boiling water resistance and the shelf viscosity stability. There is still room to further improve them.

### Disclosure of the Invention

### Problems to be Solved by the Invention

Under such circumstances, the present invention aims at providing an aqueous liquid dispersion which is excellent in both water resistance, especially boiling water resistance and shelf viscosity stability and a method for producing the same as well as a composition, an adhesive and a coating material. Means for Solving the Problems

As a result of an extensive study, the present inventors have found that the above object can be accomplished by the following aqueous liquid dispersion and have completed the present invention.

An aqueous liquid dispersion comprising (A) polymer particles mainly composed of at least one monomer unit selected from ethylenically unsaturated monomers and diene unsaturated monomers while containing 0.1 to 10% by weight of at least one crosslinkable unsaturated monomer unit selected from carboxyl group-containing unsaturated monomers, N-methylol (meth)acrylamide, N-butoxymethyl (meth)acrylamide, diacetone acrylamide and acetoacetoxyethyl (meth)acrylate, (E) a vinyl alcohol copolymer having 1 to 10% by mole of an ethylene unit and 0.1 to 10% by mole of a carboxyl group-containing monomer unit and (D) a crosslinking agent, , and comprising them at solid content weight ratios of (A)/(E) = 99/1 to 80/20 and {(A)+(E)}/(D)=99.9/0.1 to 90/10.

Also, an embodiment of the present invention is a method for producing the aqueous liquid dispersion, characterized by combining (D) the crosslinking agent with the aqueous emulsion obtained by emulsion polymerization using (E) the vinyl alcohol copolymer having 1 to 10% by mole of the ethylene unit and 0.1 to 10% by mole of the carboxyl group-containing monomer unit as the dispersant and using (A) the polymer mainly composed of at least one monomer unit selected from ethylenically unsaturated monomers and diene unsaturated monomers while containing 1 to 10% by mole of at least one crosslinkable, unsaturated monomer unit selected from carboxyl group-containing unsaturated monomers, N-methylol (meth)acrylamide, N-butoxymethyl(meth)acrylamide, diacetone acrylamide and acetoacetoxyethyl (meth)acrylate as a dispersoid.

Further embodiments of the present invention are a composition obtained by combining a filler with these aqueous liquid dispersions, an adhesive composed of the aqueous liquid dispersions or the composition, and a coating material composed of these aqueous liquid dispersions or the composition.

### Effects of the Invention

The aqueous liquid dispersion and the composition combining the filler with the aqueous liquid dispersion of the present invention have both the high water resistance, especially the excellent boiling water resistance and the excellent shelf viscosity stability, and thus, are suitably used as an adhesive and a coating material with high performance. Best Modes for Carrying Out the Invention

The polymer particles (A) in the aqueous liquid dispersion of the present invention are mainly composed of at least one monomer unit selected from ethylenically unsaturated monomers and diene unsaturated monomers, and contain at least one crosslinkable unsaturated monomer unit selected from carboxyl group-containing unsaturated monomers, N-methylol (meth)acrylamide, N-butoxymethyl (meth)acrylamide, diacetone acrylamide and acetoacetoxyethyl (meth)acrylate.

Various monomers can be used as the ethylenically unsaturated monomer unit and the diene unsaturated monomer unit which mainly compose the polymer particles. Olefin such as ethylene, propylene and isobutylene, halogenated olefin such as vinyl chloride, vinyl fluoride, vinylidene chloride and vinylidene fluoride, vinyl ester such as vinyl formate, vinyl acetate, vinyl propionate and vinyl versatate, acrylate ester such as methyl acrylate, ethyl acrylate, butyl acrylate, 2-ethylhexyl acrylate, dodecyl acrylate and 2-hydroxyethyl acrylate, methacrylate ester such as methyl methacrylate, ethyl methacrylate, butyl methacrylate, 2-ethylhexyl methacrylate, dodecyl methacrylate and 2-hydroxyethyl methacrylate, dimethylaminoethyl acrylate, dimethylaminoethyl methacrylate and quaternized products thereof, further, acrylamide based monomers such as acrylamide, methacrylamide, N,N-dimethyl acrylamide, acrylamide-2-methylpropane sulfonic acid and sodium salts thereof and methylenebisacrylamide, styrene based monomers such as styrene, α-methylstyrene, p-styrene sulfonic acid and sodium and potassium salts, additionally N-vinyl pyrrolidone, and diene monomers such as butadiene, isoprene and chloroprene are included.

Crosslinkable unsaturated monomers having an alkoxysilane group such as vinyltrimethoxysilane and methacryloxypropyltrimethoxysilane, crosslinkable unsaturated monomers having an epoxy group such as glycidyl methacrylate and allyl glycidyl ether, and crosslinkable unsaturated monomers having an oxazoline group such as vinyloxazoline and 2-propenyl-2-oxazoline can be used in the range in which performances of the present invention are not impaired.

Among the above unsaturated monomers, the vinyl ester monomer, the combinations of ethylene and the vinyl estermonomer, and the combination of vinyl ester and the (meth)acrylate ester monomer are suitable, and vinyl acetate is particularly preferable as the vinyl ester monomer unit in terms of industrial application and initial adhesive performance when the aqueous liquid dispersion is used as the adhesive. When as the vinyl ester monomer, vinyl ester of a branched higher fatty acid is used at 30% by weight or less relative to total monomers, hydrolysis in storage of the aqueous liquid dispersion is inhibited and the more preferable performance is exerted in the combination with vinyl acetate. Such vinyl ester of the branched higher fatty acid can include vinyl versatate.

As the unsaturated monomer having the carboxyl group, which composes the polymer particles (A) of the present invention, acrylic acid, methacrylic acid, crotonic acid, itaconic acid, fumaric acid, maleic acid (anhydride), phthalic acid (anhydride) and cinnamic acid are used. These can also be used in forms of neutralized products such as sodium salts and half ester.

In the present invention, the polymer particle (A) is necessary to contain at least one crosslinkable unsaturated monomer unit selected from the carboxyl group-containing unsaturated monomers, N-methylol acrylamide, N-methylol methacrylamide, N-butoxymethyl acrylamide, N-butoxymethyl methacrylamide, diacetone acrylamide, acetoacetoxyethyl acrylate and acetoacetoxyethyl methacrylate at 0.1 to 10% by weight, preferably 0.2 to 8% by weight and more preferably 0.3 to 6% by weight relative to the total monomer units.

When a content of the crosslinkable unsaturated monomer unit is less than 0.1% by weight, a crosslink density is low when a film is formed from the resulting aqueous liquid dispersion, and thus, the water resistance, particularly the boiling water resistance is insufficient. When this content exceeds 10% by weight, the shelf viscosity stability of the resulting aqueous liquid dispersion is diminished. Among these crosslinkable unsaturated monomers, the unsaturated monomer having the carboxyl group is suitable, and among the unsaturated monomers having the carboxyl group, acrylic acid and methacrylic acid are suitable. A particle diameter of the polymer particle (A) is suitably about 0.05 to 10 µm, more suitably 0.1 to 7 µm and still more suitably 0.1 to 5 µm as a measurement by a dynamic light scattering method.

In the aqueous liquid dispersion of the present invention, the vinyl alcohol copolymer (E) having the ethylene unit at 1 to 10% by mole and the carboxyl group-containingmonomer unit at 0.1 to 10% by mole can be obtained by saponifying the copolymer of vinyl ester with ethylene and the monomer having the carboxyl group. Vinyl ester includes vinyl formate, vinyl acetate, vinyl propionate and vinyl pivalate, and vinyl acetate is preferable from economical viewpoint.

In the present invention, the content of the ethylene unit in the vinyl alcohol copolymer (E) having the ethylene unit and the carboxyl group-containing monomer unit is necessary to be 1 to 10% by mole, and is preferably 2 to 8% by mole. When the content of the ethylene unit is less than 1% by mole, the water resistance is not sufficient when the film is formed from the resulting aqueous liquid dispersion. When it exceeds 10% by mole, the stable aqueous liquid dispersion is not sometimes obtained because the water solubility of the vinyl alcohol copolymer is diminished.

The content of the carboxyl group-containing monomer unit in the vinyl alcohol copolymer is necessary to be 0.1 to 10% by mole, is preferably 0.2 to 8% by mole and more preferably 0.25 to 7% by mole. When the content of the carboxyl group-containing monomer unit is less than 0.1% by mole, crosslinking points are diminished and the performances such as boiling water resistance are not sufficiently exhibited. When it exceeds 10% by mole, the viscosity stability is lowered upon addition of the crosslinking agent. Here, as the unsaturated monomer having the carboxyl group, acrylic acid, methacrylic acid, phthalic acid (anhydride), maleic acid (anhydride), itaconic acid, crotonic acid and fumaric acid are exemplified, and among them, dicarboxylic acid and half ester or anhydride thereof are suitable.

In the present invention, the vinyl alcohol copolymer (E) having the ethylene unit and the carboxyl group-containing monomer unit may be those obtained by copolymerizing a copolymerizable ethylenically unsaturated monomer in the range in which the effects of the present invention are not impaired. Such an ethylenically unsaturated monomer includes, for example, acrylonitrile, methacrylonitrile, acrylamide, methacrylamide, trimethyl-(3-acrylamide-3-dimethylpropyl)-ammonium chloride, acrylamide-2-methylpropane sulfonic acid and sodium salts thereof, ethyl vinyl ether, butyl vinyl ether, N-vinyl pyrrolidone, vinyl chloride, vinyl bromide, vinyl fluoride, vinylidene chloride, vinylidene fluoride, tetrafluoroethylene, sodium vinyl sulfonate, and sodium allyl sulfonate. It is also possible to use end-modified products obtained by copolymerizing ethylene and the monomer having the carboxyl group with the vinyl ester monomer such as vinyl acetate in the presence of a thiol compound such as thiol acetic acid and mercaptopropionic acid and saponifying it.

The saponification degree of the vinyl alcohol copolymer (E) having the ethylene unit and the carboxyl group-containing monomer unit in the present invention is suitably 80 to 99.5% by mole, more preferably 85 to 99.5% by mole and still more preferably 86 to 99.5% by mole. When the saponification degree is within this range, the water resistance, particularly the boiling water resistance and the shelf viscosity stability of the aqueous liquid dispersion of the present invention are well kept.

The polymerization degree of the polymer is preferably in the range of 100 to 4000 and more preferably 200 to 3000. When the polymerization degree is within this range, the dispersion stability of the aqueous liquid dispersion and the water resistance of its film are well kept.

In the present invention, the crosslinking agent (D) can be selected from those performing a crosslinking reaction with a carboxyl group and a hydroxyl group, and includes methylol group-containing compounds (resins), epoxy compounds (resins), aziridine group-containing compounds (resins), oxazoline group-containing compounds (resins), carbodiimide compounds, aldehyde compounds (resins), and various water soluble or colloidal metal salts in terms of crosslinking reactivity with the above functional groups in the aqueous liquid dispersion from a view point of the crosslink and pot life or the like. Preferably, water soluble epoxy compounds, polyamide amine epichlorohydrin adducts, urea-glyoxal resins, aluminum salts, zirconium salts and titanium salts are included.

In terms of crosslinkability and pot life, particularly preferably, the polyamide amine epichlorohydrin adducts, water soluble aluminum salts such as aluminum chloride and aluminum nitrate and the glyoxal based resins such as urea-glyoxal resins are included. One or two or more are suitably used as the crosslinking agent (D). In particular, when two or more selected from the water soluble aluminum salts, the polyamide amine epichlorohydrin adducts and the glyoxal based resins are combined, it is preferable because high effects of the water resistance and initial adhesiveness are realized by forming the high crosslink. For quantitative relationships in the crosslinkable aqueous liquid dispersion composition containing (A), (E) and (D), the solid content weight ratio (A)/(E) is 99/1 to 80/20, preferably 98.5/1.5 to 87/13 and more preferably 98/2 to 85/15. In this case, when the content of (A) is too high, the shelf viscosity stability and the mechanical stability of the crosslinkable aqueous liquid dispersion composition are diminished. When the content of (A) is too low, the water resistance, particularly the boiling water resistance is diminished when the film is formed from the crosslinkable aqueous liquid dispersion composition, and simultaneously, the shelf viscosity stability is deteriorated.

Furthermore, for the content ratio of the crosslinking agent (D), {(A)+(E)}/(D) is 99.9/0.1 to 90/10, preferably 99.8/0.2 to 91/9 and more preferably 99.7/0.3 to 92/8. When the content of (D) is too low, the water resistance, particularly the boiling water resistance is not sufficiently exhibited due to the decrease in the crosslink density when the film is formed from the crosslinkable aqueous liquid dispersion composition. When the content of (D) is too high, the shelf viscosity stability of the crosslinkable aqueous liquid dispersion composition is deteriorated.

The aqueous liquid dispersion (2) of the present invention is likewise obtained by various methods, and can be preferably produced by combining the crosslinking agent (D) with the aqueous emulsion, obtained by emulsion polymerization using the vinyl alcohol copolymer (E) having the ethylene unit at 1 to 10% by mole and the carboxyl group containing monomer unit at 0.1 to 10% by mole as the dispersant, and using the polymer (A) mainly composed of at least one monomer unit selected from ethylenically unsaturated monomers and diene unsaturated monomers while containing at least one crosslinkable unsaturated monomer unit at 1 to 10% by mole selected from carboxyl group-containing unsaturated monomers, N-methylol (meth)acrylamide, N-butoxymethyl (meth)acrylamide, diacetone acrylamide and acetoacetoxyethyl (meth)acrylate as the dispersoid.

The emulsion polymerization using the above (A) and (E) is not particularly limited, and can be performed under conventionally and publicly known conditions (temperature, pressure, stirring speed) for the emulsion polymerization by addition methods of the monomers (initial bulk addition, continuous addition, monomer pre-emulsified liquid addition (continuous addition of monomers emulsified in the aqueous solution of the dispersant) using the conventionally and publicly known initiator. Alternatively, the technique in which the vinyl alcohol copolymer (E) is used as the dispersant, the emulsion polymerization of the monomer which composes the polymer particles (A) is initiated, and remaining (E) is added during or after the polymerization can be employed.

Various adhesiveness, water resistance, the boiling water resistance can be enhanced by combining a filler to the aqueous liquid dispersion of the present invention to make a composition. The filler can include organic fillers and inorganic fillers. The organic fillers include wood powders, wheat f lour and starch. The inorganic fillers include clay, kaolin, talc, calcium carbonate and titanium oxide. When the inorganic filler is combined, the enhancement effect of the water resistance, particularly the boiling water resistance is remarkably preferable. A combination ratio of the filler to the aqueous liquid dispersion of the present invention is not particularly limited, and can be appropriately set depending on the usage and the purpose. The amount of the filler to be combined is suitably 5 to 200 parts by weight and more suitably 10 to 150 parts by weight relative to 100 parts by weight of {(A)+(E)}.

The aqueous liquid dispersion and the composition of the present invention may contain various organic solvents such as toluene, perchlene, dichlorobenzene and trichlorobenzene, various plasticizers such as dibutyl phthalate, various film forming aids such as glycol ethers, water soluble polymers such as ester starch, modified starch, oxidized starch, soda alginate, carboxymethylcellulose, methylcellulose, hydroxymethylcellulose, maleic acid anhydride/isobutene copolymers, maleic acid anhydride/styrene copolymers, maleic acid anhydride/methyl vinyl ether copolymers and polyvinyl alcohols other than the above (B) and (C), nonionic, anionic and cationic surfactants, various additives such as anti-foaming agents, dispersants, anti-freezing agents, preservatives and antirusts if necessary in order to control their drying property, setting property, viscosity and film forming property.

The present invention will be described in more detail below by Examples and Comparative Examples . In Examples and Comparative Examples, "parts" and "%" mean weight basis unless otherwise specified. The composition and the dispersion stability of aqueous liquid dispersion of Examples and Comparative Examples are summarized in Tables 1 and 3. Signs and the like in Table 3 are as follows.

### Example 1 (Comparative)

In a one-liter glass polymerization vessel equipped with a reflux cooler, a dropping funnel, a thermometer and a nitrogen blowing inlet, 350 g of ion-exchanged water, 20.7 g of PVA-1 (content of ethylene unit: 4.5% by mole, saponification degree: 98.1% by mole, polymerization degree: 1500) and 8.9 g of PVA-2 (content of maleic acid anhydride unit: 2.0% by mole, saponification degree: 97.8% by mole, polymerization degree: 1700) were placed and completely dissolved at 95°C. Subsequently, this aqueous solution of PVA was cooled, and then replaced with nitrogen. While stirring at 200 rpm, 36.6 g of vinyl acetate and 0.4 g of acrylic acid were added, the temperature was raised to 60°C, and then the polymerization was initiated by hydrogen peroxide/tartaric acid based redox initiators. From 15 minutes after initiating the polymerization, the mixture of 329.7 g of vinyl acetate and 3.3 g of acrylic acid was continuously added over 3 hours to complete the polymerization. A polyvinyl acetate emulsion having a solid content concentration of 50.1% and a particle diameter of 1 µm was obtained. To 100 parts by weight of the solid content of this emulsion, 5 parts of dibutyl phthalate was added and mixed as a plasticizer, and further 2.7 parts of polyamide amine epichlorohydrin adduct (25% aqueous solution, WS-4020 supplied by Seiko PMC Corporation) and 2.0 parts of aluminum nitrate were added to yield an aqueous liquid dispersion. The resulting aqueous liquid dispersion had high dispersion stability without aggregation and gelation. A film water resistance, a water resistant adhesive force and the shelf viscosity stability (pot life) were evaluated as follows. Results are shown in Table 2.

### (Evaluation of aqueous liquid dispersion and composition)

### (a) Water resistance of film

The resulting aqueous liquid dispersion or the composition was flow cast on a PET film at 20°C 65% RH, and dried for 7 days to yield a dry film of 500 µm. This film was punched out into a piece with a diameter of 2.5 cm to use as a sample. The sample was immersed in water at 20°C for 24 hours, and then a water absorption rate (%) [{(Weight after immersion - Weight before immersion)/Weight before immersion} × 100] was calculated.

### (b) Initial adhesiveness

The resulting aqueous liquid dispersion or composition was applied on hemlock firs (straight grain) at 150 g/m², which were then attached and pressed with a load of 7 kg/m² for 2 hours. Subsequently, the compressive shear strength was measured.

### (c) Water resistant adhesive force

The resulting aqueous liquid dispersion or composition was applied on hemlock firs (straight grain) at 150 g/m², which were then attached and pressed with a load of 7 kg/m² for 16 hours. Subsequently, the pressure was released, and the hemlock firs were placed under the condition at 20°C 65% RH for 5 days, then immersed in boiling water for 4 hours, dried at 60°C for 20 hours, and further immersed in the boiling water for 4 hours. Subsequently, the compressive shear strength was measured in a wet state.

### (d) Shelf viscosity stability (pot life)

The resulting aqueous liquid dispersion or composition was left to stand at 30°C, and after 30 days, the change in the viscosity was observed.

### (e) Hydrolysis resistance (decrease in adhesive force with time)

The resulting aqueous liquid dispersion or composition was left to stand at 30°C for 30 days, then was applied on hemlock firs (straight grain) at 150 g/m², which were then attached and pressed with a load of 7 kg/m² for 16 hours. Subsequently, the pressure was released, and the hemlock firs were placed under the condition at 20°C 65% RH for 5 days, then immersed in boiling water for 4 hours, dried at 60°C for 20 hours, and further immersed in the boiling water for 4 hours. Subsequently, the compressive shear strength was measured in the wet state. The strength was compared with the strength measured above (3), and determined as follows.
⊚: No change: no problem although tended to be slightly lowered
×: Remarkably lowered

### Example 2 (comparative)

An aqueous liquid dispersion was obtained in the same way as in Example 1 except that the polyamide amine epichlorohydrin adduct was not added. The results are shown in Table 2.

### Example 3 (comparative)

An aqueous liquid dispersion was obtained in the same way as in Example 1 except that aluminum nitrate was not added. The results are shown in Table 2.

### Example 4 (comparative)

An aqueous liquid dispersion was obtained in the same way as in Example 1 except that 2.4 parts of a glyoxal based resin (42% aqueous solution, Cartabond TSI supplied by Clariant) was added in place of the polyamide amine epichlorohydrin adduct and aluminum nitrate. The results are shown in Table 2.

### Comparative Example 1

An aqueous liquid dispersion was obtained in the same way as in Example 1 except that the polyamide amine epichlorohydrin adduct and aluminum nitrate were not added. The results are shown in Table 2.

### Example 5 (comparative)

An aqueous liquid dispersion was obtained in the same way as in Example 1 except that the 351.5 g of vinyl acetate (initial addition: 35.2 g, sequential addition: 316.3 g) and 18.5 g of acrylic acid (initial addition: 1.9 g, sequential addition: 16.6 g) were used. The results are shown in Table 2.

### Comparative Example 2

An aqueous liquid dispersion was obtained in the same way as in Example 1 except that the 329.3 g of vinyl acetate (initial addition: 32.9 g, sequential addition: 296.4 g) and 40.7 g of acrylic acid (initial addition: 4.1 g, sequential addition: 36.6 g) were used. The dispersion stability was poor and aggregates were formed.

### Example 6 (comparative)

An aqueous liquid dispersion was obtained in the same way as in Example 1 except that N-methylol acrylamide at the same weight was used in place of acrylic acid. The results are shown in Table 2.

### Example 7 (comparative)

An aqueous liquid dispersion was obtained in the same way as in Example 1 except that N-butoxymethyl methacrylamide was used in place of acrylic acid. The results are shown in Table 2.

### Example 8 (comparative)

An aqueous liquid dispersion was obtained in the same way as in Example 1 except that acetoacetoxyethyl methacrylate at the same weight was used in place of acrylic acid. The results are shown in Table 2.

### Example 9 (comparative)

An aqueous liquid dispersion was obtained in the same way as in Example 1 except that diacetone acrylamide at the same weight was used in place of acrylic acid. The results are shown in Table 2.

### Comparative Example 3 (comparative)

An aqueous liquid dispersion was obtained in the same way as in Example 1 except that acrylic acid was not used. The results are shown in Table 2.

### Example 10 (comparative)

An aqueous liquid dispersion was obtained in the same way as in Example 1 except that 8.9 g of PVA-3 (content of ethylene unit: 2.5% by mole, saponification degree: 92.5% by mole, polymerization degree: 1650) and 20.7 g of PVA-4 (content of itaconic acid unit: 0.8% by mole, saponification degree: 87.8% by mole, polymerization degree: 1700) were used in place of PVA-1 and PVA-2. The results are shown in Table 2.

### Example 11 (comparative)

An aqueous liquid dispersion was obtained in the same way as in Example 10 except that 18.5 g of PVA-5 (content of ethylene unit: 8.1% by mole, saponification degree: 99.1% by mole, polymerization degree: 500) was used in place of PVA-3. The results are shown in Table 2.

### Example 12 (comparative)

An aqueous liquid dispersion was obtained in the same way as in Example 1 except that 14.8 g of PVA-6 (content of ethylene unit: 1.4% by mole, saponification degree: 87.3% by mole, polymerization degree: 2000) and 3.7 g of PVA-7 (content of itaconic acid unit: 4.2% by mole, saponification degree: 95.4% by mole, polymerization degree: 600) were used in place of PVA-1 and PVA-2. The results are shown in Table 2.

### Comparative Example 4

An aqueous liquid dispersion was obtained in the same way as in Example 12 except that 14.8 g of PVA-8 (content of ethylene unit: 12.0% by mole, saponification degree: 99.2% by mole, polymerization degree: 400) was used in place of PVA-6. The aqueous liquid dispersion was unstable and the aggregates were formed.

### Comparative Example 5

An aqueous liquid dispersion was obtained in the same way as in Example 1 except that PVA-2 was not used. The results are shown in Table 2.

### Comparative Example 6

An aqueous liquid dispersion was obtained in the same way as in Example 10 except that PVA-3 was not used. The results are shown in Table 2.

### Comparative Example 7

An aqueous liquid dispersion was obtained in the same way as in Example 1 except that 20.7g of unmodified polyvinyl alcohol PVA-9 (saponification degree: 88.2% by mole, polymerization degree: 1750) was used in place of PVA-1 and PVA-2 in Example 1. The results are shown in Table 2.

### Example 13 (comparative)

In 290 g of ion-exchanged water, 5.4 g of PVA-3 (content of ethylene unit: 2.5% by mole, saponification degree: 92.5% by mole, polymerization degree: 1650) and 5.4 g of PVA-4 (content of itaconic acid unit: 0.8% by mole, saponification degree: 87.8% by mole, polymerization degree: 1700) were dissolved by heating, and the mixture was placed in a pressure resistant autoclave equipped with a nitrogen blowing inlet and a thermometer. After adjusting the pH to 4.0 with diluted sulfuric acid, 288 g of vinyl acetate and 3.6 g of methacrylic acid were placed. Then, the pressure was raised to 42 kg/cm² G using ethylene (corresponding to 68.4 g of ethylene). After raising the temperature to 60°C, the polymerization was initiated by adding a hydrogen peroxide-Rongalite based redox initiator. After 2 hours, when the concentration of residual vinyl acetate was 0.7%, the polymerization was terminated to yield a vinyl acetate-ethylene copolymer emulsion having a solid content concentration of 52.5% and a particle diameter of 1 µm. To 100 parts by weight of the solid content of this emulsion, 50 parts by weight of calcium carbonate was added and mixed, and further 5.0 parts of aluminum nitrate was added to yield an aqueous liquid dispersion composition. Using this composition, the same evaluation as in Example 1 was performed. The results are shown in Table 2.

### Example 14 (comparative)

In a one-liter glass polymerization vessel equipped with a reflux cooler, a dropping funnel, a thermometer and a nitrogen blowing inlet, 350 g of ion-exchanged water, 11.1 g of PVA-1 (content of ethylene unit: 4.5% by mole, saponification degree: 98.1% by mole, polymerization degree: 1500) and 22.2 g of PVA-7 (content of itaconic acid unit: 4.2% by mole, saponification degree: 95.4% by mole, polymerization degree: 600) were placed and completely dissolved at 95°C. Subsequently, this aqueous solution of PVA was cooled, and then replaced with nitrogen. While stirring at 200 rpm, 25.9 g of vinyl acetate and 10.4 g of butyl acrylate were added, the temperature was raised to 60°C, and then the polymerization was initiated by adding 10 g of an aqueous solution of 2% potassium persulfate. From 15 minutes after initiating the polymerization, the mixture of 233.1 g of vinyl acetate, 93.2 g of N-butyl acrylate and 7.4 g of N-isobutoxymethyl methacrylamide was continuously added over 4 hours to complete the polymerization. A vinyl acetate-butyl acrylate copolymer emulsion having a solid content concentration of 49.5% and a particle diameter of 0.8 µm was obtained. To 100 parts by weight of the solid content of this emulsion, 50 parts by weight of wheat flour was added and mixed, and 5.0 parts of aluminum nitrate was added to yield an aqueous liquid dispersion composition. Using this composition, the same evaluation as in Example 1 was performed. The results are shown in Table 2.

### Example 15 (comparative)

In 290 g of ion-exchanged water, 1.5 g of an anionic surfactant (Sundet BL supplied by Sanyo Chemical Industries, Ltd.) and 3.0 g of a nonionic surfactant (Nonipol 200 supplied by Sanyo Chemical Industries, Ltd.) were dissolved by heating, and the mixture was placed in a pressure resistant autoclave equipped with a nitrogen blowing inlet and a thermometer. After adjusting the pH to 4.0 with diluted sulfuric acid, 120 g of styrene and 3.0 g of methacrylic acid were placed. Then, 177 g of butadiene was placed from a pressure proof measurer, and after raising the temperature to 70°C, the polymerization was initiated by adding 10 g of the aqueous solution of 2% potassium persulfate with pressure. The internal pressure was decreased from 4.8 kg/cm² G with progress of the polymerization, and the polymerization was terminated when the pressure was decreased to 0.4 kg/cm² G after 15 hours. The resulting emulsion was adjusted to pH 6.0 with ammonia water to yield a styrene-butadiene copolymer emulsion having a solid content concentration of 48.5% and a particle diameter of 0.5 µm. To 100 parts by weight of the solid content of this emulsion, the mixture obtained by dissolving, by heating, 3 parts by weight of PVA- 5 (content of ethylene unit: 8.1% by mole, saponification degree: 99.1% by mole, polymerization degree: 500) and 3 parts by weight of PVA-7 (content of itaconic acid unit: 4.2% by mole, saponification degree: 95.4% by mole, polymerization degree: 600) in 34 parts by weight of ion-exchanged water was added and mixed, and further 2.7 parts of the polyamide amine epichlorohydrin adduct (25% aqueous solution, WS-4020 supplied by Seiko PMC Corporation) and 2.0 parts of aluminum nitrate were added to yield an aqueous liquid dispersion. The resulting aqueous liquid dispersion had high dispersion stability without aggregation and gelation, and was evaluated in the same way as in Example 1. The results are shown in Table 2.

### Example 16 (comparative)

An aqueous liquid dispersion was obtained in the same way as in Example 1 except that 10% of vinyl acetate was changed to vinyl versatate (VeoVa-10). The results are shown in Table 2. It has been found in the above Examples and Comparative Examples that the aqueous liquid dispersion of the present invention exerts excellent performances as adhesives and the coating materials.

**[Table 1]**

| | Aqueous liquid dispersion | | | | Filler | Dispersion stability |
|---|---|---|---|---|---|---|
| | *1) | *2) | *2) | *3) | | |
| | (A) | (B) | (C) | (D) | | |
| Example 1 | VAC (99) | PVA-1 (5.6) | PVA-2 (2.4) | PAEpi (0.67) | - | ○ |
| | AA (1) | | | Al(NO₃)₃ (2.0) | | |
| Example 2 | VAC (99) | PVA-1 (5.6) | PVA-2 (2.4) | Al(NO₃)₃ (2.0) | - | ○ |
| | AA (1) | | | | | |
| Example 3 | VAC (99) | PVA-1 (5.6) | PVA-2 (2.4) | PAEpi (0.67) | - | ○ |
| | AA (1) | | | | | |
| Example 4 | VAC (99) | PVA-1 (5.6) | PVA-2 (2.4) | GOX (1.0) | - | ○ |
| | AA (1) | | | | | |
| Comparative Example 1 | VAC (99) | PVA-1 (5.6) | PVA-2 (2.4) | - | - | ○ |
| | AA (1) | | | | | |
| Example 5 | VAC (95) | PVA-1 (5.6) | PVA-2 (2.4) | PAEpi (0.67) | - | ○ |
| | AA (5) | | | Al(No₃)₃ (2.0) | | |
| Comparative Example 2 | VAC (89) | PVA-1 (5.6) | PVA-2 (2.4) | PAEpi (0.67) | - | Aggregation |
| | AA (11) | | | Al(NO₃)₃ (2.0) | | |
| Example 6 | VAC (99) | PVA-1 (5.6) | PVA-2 (2.4) | PAEpi (0.67) | - | ○ |
| | NMA (1) | | | Al(NO₃)₃ (2.0) | | |
| Example 7 | VAC (99) | PVA-1 (5.6) | PVA-2 (2.4) | PAEp1 (0.67) | - | ○ |
| | BMA (1) | | | Al(NO₃)₃ (2.0) | | |
| Example 8 | VAC (99) | PVA-1 (5.6) | PVA-2 (2.4) | PAEpi (0.67) | - | ○ |
| | AAEM (1) | | | AL(NO₃)₃ (2.0) | | |
| Example 9 | VAC (99) | PVA-1 (5.6) | PVA-2 (2.4) | PAEpi (0.67) | - | ○ |
| | DAA (1) | | | Al(NO₃)₃ (2.0) | | |
| Comparative Example 3 | VAC (100) | PVA-1 (5.6) | PVA-2 (2.4) | PAEpi (0.67) | - | ○ |
| | | | | Al(NO₃)₃ (2.0) | | |
| Example 10 | VAC (99) | PVA-3 (2.4) | PVA-4 (5.6) | PAEpi (0.67) | - | ○ |
| | AA (1) | | | Al(NO₃)₃ (2.0) | | |
| Example 11 | VAC (99) | PVA-5 (5) | PVA-4 (5.6) | PAEpi (0.67) | - | ○ |
| | AA (1) | | | Al(NO₃)₃ (2.0) | | |
| Example 12 | VAC (99) | PVA-6 (4) | PVA-7 (1) | PAEpi (0.67) | - | ○ |
| | AA (1) | | | Al(NO₃)₃ (2.0) | | |
| Comparative Example 4 | VAC (99) | PVA-8 (4) | PVA-7 (1) | PAEpi (0.67) | - | Aggregation |
| | AA (1) | | | Al(NO₃)₃ (2.0) | | |
| Comparative Example 5 | VAC (99) | PVA-1 (5.6) | - | PAEpi (0.67) | - | ○ |
| | AA (1) | | | Al(NO₃)₃ (2.0) | | |
| Comparative Example 6 | VAC (99) | - | PVA-4 (5.6) | PAEpi (0.67) | - | ○ |
| | AA (1) | | | Al(NO₃)₃ (2.0) | | |
| Comparative Example 7 | VAC (99) | PVA-9 (5.6) | | PAEpi (0.67) | - | ○ |
| | AA (1) | | | Al(NO₃)₃ (2.0) | | |
| Example 13 | VAC (80) | PVA-3 (1.5) | PVA-4 (1.5) | Al(NO₃)₃ (5.0) | CaCO₃ | ○ |
| | Et (19) | | | | | |
| | MAA (1) | | | | | |
| Example 14 | VAC (70) | PVA-1 (3) | PVA-7 (6) | Al(NO₃)₃ (5.0) | Wheat flour | ○ |
| | BA (28) | | | | | |
| | BMA (2) | | | | | |
| Example 15 | St (40) | PVA-5 (3) | PVA-7 (3) | PAEpi (0.67) | - | ○ |
| | Bd (59) | | | Al(NO₃)₃ (2.0) | | |
| | MAA (1) | | | | | |
| Example 16 | VAC (89) | PVA-1 (5.6) | PVA-2 (2.4) | PAEpi (0.67) | - | ○ |
| | VeoVa-10 (10) | | | Al(NO₃)₃ (2.0) | | |
| | AA (1) | | | | | |

| | | | | | | |
|---|---|---|---|---|---|---|
| Examples 1-16 are comparative examples *1) Numbers in parentheses denote % by weight. *2) Numbers in parentheses denote parts by weight relative to 100 parts by weight of (A). *3) Numbers in parentheses denote parts by weight relative to 100 parts by weight of [(A)+(B)+(C)] VAC: vinyl acetate Et: ethylene BA: butyl acrylate St: styrene Bd: butadiene AA: acrylic acid MAA: methacrylic acid NMA: N-methylol acrylamide BMA: N-butoxymethyl methacrylamide AAEM: acetoacetoxyethyl methacrylate DAA: diacetone acrylamide VeoVa-10: vinyl versatate PVA-1: vinyl alcohol polymer having the ethylene content of 4.5% by mole, the saponification degree of 98.1% by mole and the polymerization degree of 1500. PVA-2: vinyl alcohol polymer having the maleic acid anhydride content of 2.0% by mole, the saponification degree of 97.8% by mole and the polymerization degree of 1700. PVA-3: vinyl alcohol polymer having the ethylene content of 2.5% by mole, the saponification degree of 92.5% by mole and the polymerization degree of 1650. PVA-4: vinyl alcohol polymer having the itaconic acid content of 0.8% by mole, the saponification degree of 87.8% by mole and the polymerization degree of 1700. PVA-5: vinyl alcohol polymer having the ethylene content of 8.1% by mole, the saponification degree of 99.1% by mole and the polymerization degree of 500. PVA-6: vinyl alcohol polymer having the ethylene content of 1.4% by mole, the saponification degree of 87.3% by mole and the polymerization degree of 2000. PVA-7: vinyl alcohol polymer having the itaconic acid content of 4.2% by mole, the saponification degree of 95.4% by mole and the polymerization degree of 600. PVA-8: vinyl alcohol polymer having the ethylene content of 12.0% by mole, the saponification degree of 99.2% by mole and the polymerization degree of 400. PVA-9: vinyl alcohol polymer having the saponification degree of 88.2% by mole and the polymerization degree of 1750. PAEpi: polyamide amine epichlorohydrin resin (25% aqueous solution, WS-4020 supplied by Seiko PMC Corporation) GOX: glyoxal based resin (42% aqueous solution, Cartabond TSI supplied by Clariant) | | | | | | |

**[Table 2]**

| | Film water resistance | Initial adhesiveness | Boiling water resistant adhesive force on wood | Viscosity stability | Hydrolysis resistance |
|---|---|---|---|---|---|
| | Water absorption rate (%) | Compressive shear strength (kg/cm2) | Compressive shear strength (kg/cm2) Numbers in parentheses denote material breaking rates (%) | Observation of state | Change in adhesive force |
| Example 1 | 22.0 | 30.0 | 60 (100) | No change | ○ |
| Example 2 | 24.5 | 25.0 | 58 (90) | No change | ○ |
| Example 3 | 25.0 | 25.0 | 50 (80) | No change | ○ |
| Example 4 | 25.4 | 26.0 | 50 (70) | No change | ○ |
| Comparative Example 1 | 39.0 | 24.0 | 0 (0) | No change | ⊚ |
| Example 5 | 22.9 | 29.0 | 65 (100) | Slightly increased viscosity | ○ |
| Comparative Example 2 | Immeasurable due to aggregation | | | | |
| Example 6 | 23.2 | 28.0 | 55 (90) | No change | ○ |
| Example 7 | 24.1 | 28.0 | 60 (90) | No change | ○ |
| Example 8 | 24.0 | 27.0 | 50 (80) | No change | ○ |
| Example 9 | 25.8 | 27.0 | 45 (50) | No change | ○ |
| Comparative Example 3 | 30.1 | 27.0 | 5 (0) | No change | ○ |
| Example 10 | 24.0 | 27.0 | 55 (80) | No change | ○ |
| Example 11 | 25.6 | 27.0 | 50 (60) | Slightly increased viscosity | ○ |
| Example 12 | 25.0 | 27.0 | 50 (50) | No change | ○ |
| Comparative Example 4 | Immeasurable due to aggregation | | | | |
| Comparative Example 5 | 29.5 | 25.0 | 5 (0) | No change | ○ |
| Comparative Example 6 | 31.5 | 25.0 | 10 (0) | Slightly increased viscosity | ○ |
| Comparative Example 7 | 43.0 | 25.0 | 0 (0) | No change | ○ |
| Example 13 | 19.2 | 22.0 | 65 (100) | No change | ○ |
| Example 14 | 20.1 | 21.0 | 50 (70) | No change | ○ |
| Example 15 | 21.5 | 18.0 | 40 (30) | Slightly increased viscosity | ○ |
| Example 16 | 21.0 | 28.0 | 58 (100) | No change | ⊚ |

| | | | | | |
|---|---|---|---|---|---|
| Examples 1-16 are comparative examples | | | | | |

### Example 17

In a one-liter glass polymerization vessel equipped with a reflux cooler, a dropping funnel, a thermometer and a nitrogen blowing inlet, 350 g of ion-exchanged water, 29.6 g of PVA-10 (content of ethylene unit: 4.5% by mole, content of itaconic acid unit: 1.0% by mole, saponification degree: 98.1% by mole, polymerization degree: 1300) were placed and completely dissolved at 95°C. Subsequently, this aqueous solution of PVA was cooled, and then replaced with nitrogen. While stirring at 200 rpm; 36.6 g of vinyl acetate and 0.4 g of acrylic acid were added, the temperature was raised to 60°C, and then the polymerization was initiated by the hydrogen peroxide/tartaric acid based redox initiator.

From 15 minutes after initiating the polymerization, the mixture of 329.7 g of vinyl acetate and 3.3 g of acrylic acid was continuously added over 3 hours to complete the polymerization. A polyvinyl acetate emulsion having a solid content concentration of 50.0% and a particle diameter of 0.9 µm was obtained. To 100 parts of the solid content of this emulsion, 5 parts of dibutyl phthalate was added and mixed as the plasticizer, and further 2.7 parts of polyamide amine epichlorohydrin adduct (25% aqueous solution, WS-4020 supplied by Seiko PMC Corporation) and 2.0 parts of aluminum nitrate were added to yield a crosslinkable aqueous liquid dispersion composition. The resulting composition had the high dispersion stability without aggregation and gelation. The film water resistance, the water resistant adhesive force and the shelf viscosity stability (pot life) were evaluated. The results are shown in Table 4.

### Example 18

An aqueous liquid dispersion was obtained in the same way as in Example 17 except that the polyamide amine epichlorohydrin adduct was not added. The results are shown in Table 4.

### Example 19

An aqueous liquid dispersion was obtained in the same way as in Example 17 except that aluminum nitrate was not added. The results are shown in Table 4.

### Example 20

An aqueous liquid dispersion was obtained in the same way as in Example 17 except that 2.4 parts of the glyoxal based resin (42% aqueous solution, Cartabond TSI supplied by Clariant) was added in place of the polyamide amine epichlorohydrin adduct and aluminum nitrate. The results are shown in Table 4.

### Comparative Example 8

An aqueous liquid dispersion was obtained in the same way as in Example 17 except that the polyamide amine epichlorohydrin adduct and aluminum nitrate were not added. The results are shown in Table 4.

### Example 21

An aqueous liquid dispersion was obtained in the same way as in Example 17 except that the 351.5 g of vinyl acetate (initial addition: 35.2 g, sequential addition: 316.3 g) and 18.5 g of acrylic acid (initial addition: 1.9 g, sequential addition: 16.6 g) were used. The results are shown in Table 4.

### Comparative Example 9

An aqueous liquid dispersion was obtained in the same way as in Example 17 except that the 329.3 g of vinyl acetate (initial addition: 32.9 g, sequential addition: 296.4 g) and 40.7 g of acrylic acid (initial addition: 4.1 g, sequential addition: 36.6 g) were used. The dispersion stability was poor and aggregates were formed.

### Example 22

An aqueous liquid dispersion was obtained in the same way as in Example 17 except that N-methylol acrylamide at the same weight was used in place of acrylic acid. The results are shown in Table 4.

### Example 23

An aqueous liquid dispersion was obtained in the same way as in Example 17 except that N-butoxymethyl methacrylamide at the same weight was used in place of acrylic acid. The results are shown in Table 4.

### Example 24

An aqueous liquid dispersion was obtained in the same way as in Example 17 except that acetoacetoxyethyl methacrylate at the same weight was used in place of acrylic acid. The results are shown in Table 4.

### Example 25

An aqueous liquid dispersion was obtained in the same way as in Example 17 except that diacetone acrylamide at the same weight was used in place of acrylic acid. The results are shown in Table 4.

### Comparative Example 10

An aqueous liquid dispersion was obtained in the same way as in Example 17 except that acrylic acid was not used. The results are shown in Table 4.

### Example 26

An aqueous liquid dispersion was obtained in the same way as in Example 17 except that 29.6 g of PVA-11 (content of ethylene unit: 2.0% by mole, content of itaconic acid unit: 0.5% by mole, saponification degree: 89.9% by mole, polymerization degree: 2050) was used in place of PVA-10. The results are shown in Table 4.

### Example 27

An aqueous liquid dispersion was obtained in the same way as in Example 26 except that 29.6 g of PVA-12 (content of ethylene unit: 8.1% by mole, content of maleic acid unit: 5.% by mole, saponification degree: 99.1% by mole, polymerization degree: 500) was used in place of PVA-11. The results are shown in Table 4.

### Comparative Example 11

A crosslinkable aqueous liquid-dispersion composition was obtained in the same way as in Example 27 except that 29.6 g of PVA-13 (content of ethylene unit: 12.0% by mole, content of maleic acid unit: 5.1% by mole, saponification degree: 99.2% by mole, polymerization degree: 480) was used in place of PVA-12. The composition was unstable and the aggregates were formed.

### Comparative Example 12

An aqueous liquid dispersion was obtained in the same way as in Example 27 except that 29.6 g of PVA-14 (content of ethylene unit: 4.5% by mole, saponification degree: 98.1% by mole, polymerization degree: 1500) was used in place of PVA-12. The results are shown in Table 4.

### Comparative Example 13

An aqueous liquid dispersion was obtained in the same way as in Example 27 except that 29.6 g of PVA-15 (content of itaconic acid unit: 1.2% by mole, saponification degree: 89.2% by mole, polymerization degree: 1700) was used in place of PVA-12. The results are shown in Table 4.

### Comparative Example 14

An aqueous liquid dispersion was obtained in the same way as in Example 27 except that 29.6 g of unmodified polyvinyl alcohol PVA-16 (saponification degree: 88.2% by mole, polymerization degree: 1750) was used in place of PVA-12. The results are shown in Table 4.

### Example 28

In 290 g of ion-exchanged water, 10.8 g of PVA-17 (content of ethylene unit: 1.5% by mole, content of itaconic acid unit: 2.2% by mole, saponification degree: 92.0% by mole, polymerization degree: 700) was dissolved by heating, and the mixture was placed in a pressure resistant autoclave equipped with a nitrogen blowing inlet and a thermometer. After adjusting the pH to 4.0 with diluted sulfuric acid, 288 g of vinyl acetate and 3.6 g of methacrylic acid were placed. Then, the pressure was raised to 42 kg/cm² G using ethylene (corresponding to 68.4 g of ethylene). After raising the temperature to 60°C, the polymerization was initiated by adding the hydrogen peroxide-Rongalite based redox initiator.

After 2 hours, when the concentration of residual vinyl acetate was 0.7%, the polymerization was terminated to yield a vinyl acetate-ethylene copolymer emulsion having a solid content concentration of 52.3% and a particle diameter of 0.8 µm. To 100 parts of the solid content of this emulsion, 50 parts of calcium carbonate was added and mixed, and further 5.0 parts of aluminum nitrate was added to yield an aqueous liquid dispersion composition. Using this composition, the same evaluation as in Example 17 was performed. The results are shown in Table 4.

### Example 29

In a one-liter glass polymerization vessel equipped with a reflux cooler, a dropping funnel, a thermometer and a nitrogen blowing inlet, 350 g of ion-exchanged water, 33.3 g of PVA-10 (content of ethylene unit: 4.5% by mole, content of itaconic acid unit: 1.0% by mole, saponification degree: 98.1% by mole, polymerization degree: 1300) were placed and completely dissolved at 95°C. Subsequently, this aqueous solution of PVA was cooled, and then replaced with nitrogen. While stirring at 200 rpm, 25.9 g of vinyl acetate and 10.4 g of butyl acrylate were added, the temperature was raised to 60°C, and then the polymerization was initiated by adding 10 g of an aqueous solution of 2% potassium persulfate.

From 15 minutes after initiating the polymerization, the mixture of 233.1 g of vinyl acetate, 93.2 g of N-butyl acrylate and 7.4 g of isobutoxymethyl methacrylamide was continuously added over 4 hours to complete the polymerization. A vinyl acetate-butyl acrylate copolymer emulsion having a solid content concentration of 49.6% and a particle diameter of 0.8 µm was obtained. To 100 parts by weight of the solid content of this emulsion, 50 parts by weight of wheat flour was added and mixed, and further 5.0 parts of aluminum nitrate was added to yield an aqueous liquid dispersion composition. Using this composition, the same evaluation as in Example 17 was performed. The results are shown in Table 4.

### Example 30

In 290 g of ion-exchanged water, 1.5 g of an anionic surfactant (Sundet BL supplied by Sanyo Chemical Industries, Ltd.) and 3.0 g of a nonionic surfactant (Nonipol 200 supplied by Sanyo Chemical Industries, Ltd.) were dissolved by heating, and the mixture was placed in a pressure resistant autoclave equipped with a nitrogen blowing inlet and a thermometer. After adjusting the pH to 4.0 with diluted sulfuric acid, 120 g of styrene and 3.0 g of methacrylic acid were placed. Then, 177 g of butadiene was placed from the pressure proof measurer, and after raising the temperature to 70°C, the polymerization was initiated by adding 10 g of the aqueous solution of 2% potassium persulfate with pressure. The internal pressure was decreased from 4.8 kg/cm² G with progress of the polymerization, and the polymerization was terminated when the internal pressure was decreased to 0.4 kg/cm² G after 15 hours.

The resulting emulsion was adjusted to pH 6.0 with ammonia water to yield a styrene-butadiene copolymer emulsion having a solid content concentration of 48.5% and a particle diameter of 0.5 µm. To 100 parts of the solid content of this emulsion, the mixture obtained by dissolving, by heating, 6 parts by weight of PVA-12 (content of ethylene unit: 8.1% by mole, content of maleic acid unit: 5.1% by mole, saponification degree: 99.1% by mole, polymerization degree: 500) in 34 parts by weight of ion-exchanged water was added and mixed, and further 2.7 parts of polyamide amine epichlorohydrin adduct (25% aqueous solution, WS-4020 supplied by Seiko PMC Corporation) and 2.0 parts of aluminum nitrate were added to yield an aqueous liquid dispersion. The resulting aqueous liquid dispersion had high dispersion stability without aggregation and gelation, and was evaluated in the same way as in Example 17. The results are shown in Table 4. From the above results, it is obvious that the aqueous liquid dispersion of the present invention is excellent as an adhesive or a coating material.

**[Table 3]**

| | Crosslinkable aqueous liquid dispersion composition | | | | |
|---|---|---|---|---|---|
| | *1) | *2) | *3) | Filler | Dispersion stability |
| | (A) | (D) | (D) | | |
| Example 17 | VAC (99) | PVA-10 (8.0) | PAEpi (0.67) | - | ○ |
| | AA(1) | | Al(NO₃)₃ (2.0) | | |
| Example 18 | VAC (99) | PVA-10 (8.0) | Al(NO₃)₃ (2.0) | - | ○ |
| | AA (1) | | | | |
| Example 19 | VAC (99) | PVA-10 (8.0) | PAEpi (0.67) | - | ○ |
| | AA (1) | | | | |
| Example 20 | VAC (99) | PVA-10 (8.0) | GOX (1.0) | - | ○ |
| | AA (1) | | | | |
| Comparative Example 8 | VAC (99) | PVA-10 (8.0) | - | - | ○ |
| | AA (1) | | | | |
| Example 21 | VAC (95) | PVA-10 (8.0) | PAEpi (0.67) | - | ○ |
| | AA (5) | | Al(NO₃)₃ (2.0) | | |
| Comparative Example 9 | VAC (89) | PVA-10 (8.0) | PAEpi (0.67) | - | Aggregation |
| | AA (11) | | Al(NO₃)₃ (2.0) | | |
| Example 22 | VAC (99) | PVA-10 (8.0) | PAEpi (0.67) | - | ○ |
| | NMA (1) | | Al(NO₃)₃ (2.0) | | |
| Example 23 | VAC (99) | PVA-10 (8.0) | PAEpi (0.67) | - | ○ |
| | BMA (1) | | Al(NO₃)₃ (2.0) | | |
| Example 24 | VAC (99) | PVA-10 (8.0) | PAEpi (0.67) | - | ○ |
| | AAEM (1) | | Al(NO₃)₃ (2.0) | | |
| Example 25 | VAC (99) | PVA-10 (8.0) | PAEpi (0.67) | - | ○ |
| | DAA (1) | | Al(NO₃)₃ (2.0) | | |
| Comparative Example 10 | VAC (100) | PVA-10 (8.0) | PAEpi (0.67) | - | ○ |
| | | | Al(NO₃)₃ (2.0) | | |
| Example 26 | VAC (99) | PVA-11 (8.0) | PAEpi (0.67) | - | ○ |
| | AA (1) | | Al(NO₃)₃ (2.0) | | |
| Example 27 | VAC (99) | PVA-12 (8.0) | PAEpi (0.67) | - | ○ |
| | AA (1) | | Al(NO₃)₃ (2.0) | | |
| Comparative Example 11 | VAC (99) | PVA-13 (8.0) | PAEpi (0.67) | - | Aggregation |
| | AA (1) | | Al(NO₃)₃ (2.0) | | |
| Comparative Example 12 | VAC (99) | PVA-14 (8.0) | PAEpi (0.67) | - | ○ |
| | AA (1) | | Al(NO₃)₃ (2.0) | | |
| Comparative Example 13 | VAC (99) | PVA-15 (8.0) | PAEpi (0.67) | - | ○ |
| | AA (1) | | Al(NO₃)₃ (2.0) | | |
| Comparative Example 14 | VAC (99) | PVA-16 (8.0) | PAEpi (0.67) | - | ○ |
| | AA (1) | | Al(NO₃)₃ (2.0) | | |
| Example 28 | VAC (80) | PVA-17 (3.0) | Al(NO₃)₃ (5.0) | CaCO₃. | ○ |
| | Et (19) | | | | |
| | MAA (1) | | | | |
| Examples 29 | VAC (70) | PVA-10 (9.0) | Al(NO₃)₃ (5.0) | Wheat flour | ○ |
| | BA (28) | | | | |
| | BMA (2) | | | | |
| Example 30 | St (40) | PVA-12 (6.0) | PAEpi (0.67) | - | ○ |
| | Bd (59) | | Al(NO₃)₃ (2.0) | | |
| | MAA (1) | | | | |

| | | | | | |
|---|---|---|---|---|---|
| *1) Numbers in parentheses denote % by weight. *2) Numbers in parentheses denote parts by weight relative to 100 parts by weight of (A). *3) Numbers in parentheses denote parts by weight relative to 100 parts by weight of [(A)+(B)]. VAC: vinyl acetate Et: ethylene BA: butyl acrylate St: styrene Bd: butadiene AA: acrylic acid MAA: methacrylic acid NMA: N-methylol acrylamide BMA: N-butoxymethyl methacrylamide AAEM: acetoacetoxyethyl methacrylate DAA: diacetone acrylamide PAEpi: polyamide amine epichlorohydrin resin (25% aqueous solution, WS-4020 supplied by Seiko PMC Corporation) GOX: glyoxal based resin (42% aqueous solution, Cartabond TSI supplied by Clariant) | | | | | |

**[Table 4]**

| | Film water resistance | Holing water resistant adhesive force on wood | Viscosity stability |
|---|---|---|---|
| | Water absorption rate (%) | Compressive shear strength (kg/cm2) Numbers in parentheses denote material breaking rates (%) | Observation of state |
| Example 17 | 20.0 | 55 (90) | No change |
| Example 18 | 24.5 | 50 (70) | No change |
| Example 19 | 26.0 | 50 (70) | No change |
| Example 20 | 25.5 | 45 (60) | No change |
| Comparative Example 8 | 35.0 | 0 (0) | No change |
| Example 21 | 21.7 | 60 (90) | Slightly increased viscosity |
| Comparative Example 9 | Immeasurable due to aggregation | | |
| Example 22 | 22.1 | 50 (80) | No change |
| Example 23 | 24.0 | 50 (70) | No change |
| Example 24 | 24.2 | 45 (70) | No change |
| Example 25 | 25.0 | 40 (50) | No change |
| Comparative Example 10 | 29.5 | 5 (0) | No change |
| Example 26 | 25.0 | 55 (80) | No change |
| Example 27 | 25.2 | 50 (60) | Slightly increased viscosity |
| Comparative Example 11 | Immeasurable due to aggregation | | |
| Comparative Example 12 | 27.5 | 5 (0) | No change |
| Comparative Example 13 | 32.2 | 10 (0) | Slightly increased viscosity |
| Comparative Example 14 | 42.0 | 0 (0) | No change |
| Example 28 | 18.0 | 60 (90) | No change |
| Example 29 | 21.0 | 50 (70) | No change |
| Example 30 | 21.0 | 40 (30) | Slightly increased viscosity |

### Industrial Applicability

The aqueous liquid dispersion of the present invention is excellent in water resistance, particularly boiling water resistance and is further excellent in shelf viscosity stability (pot life is long), and thus, is extremely useful for usage as various adhesives for woodwork and paper coating, paints and various coating materials for paper coating and textile processing by exploiting its properties.

## Claims

1. An aqueous liquid dispersion comprising (A) polymer particles mainly composed of at least one monomer unit selected from ethylenically unsaturated monomers and diene unsaturated monomers while containing 0.1 to 10% by weight relative to the total monomer unit, of at least one crosslinkable unsaturated monomer unit selected from carboxyl group-containing unsaturated monomers, N-methylol (meth)acrylamide, N-butoxymethyl (meth)acrylamide, diacetone acrylamide and acetoacetoxyethyl (meth)acrylate; (E) a vinyl alcohol copolymer having 1 to 10% by mole of an ethylene unit and 0.1 to 10% by mole of a carboxyl group-containing monomer unit; and (D) a crosslinking agent, wherein as solid content weight ratios, (A)/(E) is 99/1 to 80/20 and {(A)+(E)}/(D) is 99.9/0.1 to 90/10.

2. The aqueous liquid dispersion according to claim 1 wherein the polymer particles (A) are polymer particles mainly composed of a vinyl acetate unit.

3. The aqueous liquid dispersion according to claim 1 wherein the polymer particles (A) are polymer particles comprising a vinyl ester unit of a branched fatty acid at 30% by weight or less.

4. The aqueous liquid dispersion according to claim 3 wherein the vinyl ester unit of the branched fatty acid is a vinyl versatate unit.

5. The aqueous liquid dispersion according to any of claims 1 to 4 wherein the crosslinking agent (D) is at least one selected from polyamide amine epichlorohydrin adducts, water soluble aluminum salts and glyoxal based resins.

6. The aqueous liquid dispersion according to any of claims 1 to 4 wherein the crosslinking agents (D) are at least two selected from polyamide amine epichlorohydrin adducts, water soluble aluminum salts and glyoxal based resins.

7. A method for producing an aqueous liquid dispersion **characterized by** combining (D) a crosslinking agent with an aqueous emulsion obtained by emulsion polymerization using (E) a vinyl alcohol copolymer having 1 to 10% by mole of an ethylene unit and 0.1 to 10% by mole of a carboxyl group-containing monomer unit as a dispersant and using (A) a polymer mainly composed of at least one monomer unit selected from ethylenically unsaturated monomers and diene unsaturated monomers while containing 1 to 10% by mole of at least one crosslinkable unsaturated monomer unit selected from carboxyl group-containing unsaturated monomers, N-methylol (meth)acrylamide, N-butoxymethyl (meth)acrylamide, diacetone acrylamide and acetoacetoxyethyl (meth)acrylate as a dispersoid.

8. A composition combining a filler with the aqueous liquid dispersion according to any of claims 1 to 6.

9. An adhesive composed of the aqueous liquid dispersion according to any of claims 1 to 6 or the composition according to claim 8.

10. A coating material composed of the aqueous liquid dispersion according to any of claims 1 to 6 or the composition according to claim 8.

## Patentansprüche

1. Wässrige flüssige Dispersion, umfassend:
(A) Polymerteilchen, die hauptsächlich aus mindestens einer Monomereinheit zusammengesetzt sind, ausgewählt aus ethylenisch ungesättigten Monomeren und dienungesättigten Monomeren und gleichzeitig enthaltend 0,1 bis 10 Gew.-% in Bezug auf die Gesamtmonomereinheit mindestens einer vernetzbaren ungesättigten Monomereinheit, ausgewählt aus carboxylgruppenhaltigen ungesättigten Monomeren, N-Methylol(meth)acrylamid, N-Butoxymethyl(meth)acrylamid, Diacetonacrylamid und Acetoacetoxyethyl(meth)acrylat;
(E) ein Vinylalkohol-Copolymer mit 1 bis 10 Mol-% einer Ethyleneinheit und 0,1 bis 10 Mol-% einer carboxylgruppenhaltigen Monomereinheit; und
(D) ein Vernetzungsmittel, wobei als Feststoffgehalt-Gewichtsverhältnisse (A):(E) 99:1 bis 80:20 ist und {(A)+(E)}/(D) 99,9/0,1 bis 90:10 ist.

2. Wässrige flüssige Dispersion nach Anspruch 1, wobei die Polymerteilchen (A) Polymerteilchen sind, die hauptsächlich aus einer Vinylacetateinheit zusammengesetzt sind.

3. Wässrige flüssige Dispersion nach Anspruch 1, wobei die Polymerteilchen (A) Polymerteilchen sind, die eine Vinylestereinheit einer verzweigten Fettsäure mit 30 Gew.-% oder weniger umfassen.

4. Wässrige flüssige Dispersion nach Anspruch 3, wobei die Vinylestereinheit der verzweigten Fettsäure eine Vinylversatateinheit ist.

5. Wässrige flüssige Dispersion nach einem der Ansprüche 1 bis 4, wobei das Vernetzungsmittel (D) mindestens eines ist, das ausgewählt ist aus Polyamid-Amin-Epichlorhydrin-Addukten, wasserlöslichen Aluminiumsalzen und Harzen auf Glyoxalbasis.

6. Wässrige flüssige Dispersion nach einem der Ansprüche 1 bis 4, wobei die Vernetzungsmittel (D) mindestens zwei sind, die ausgewählt sind aus PolyamidAmin-Epichlorhydrin-Addukten, wasserlöslichen Aluminiumsalzen und Harzen auf Glyoxalbasis.

7. Herstellungsverfahren einer wässrigen flüssigen Dispersion,
**gekennzeichnet durch**
Verbinden eines (D) Vernetzungsmittels mit einer wässrigen Emulsion, die **durch** Emulsionspolymerisation unter Verwendung eines (E) Vinylalkohol-Copolymers mit 1 bis 10 Mol-% einer Ethyleneinheit und 0,1 bis 10 Mol-% einer carboxylgruppenhaltigen Monomereinheit als Dispergiermittel erhalten wird, und
Verwenden eines (A) Polymers, das hauptsächlich aus mindestens einer Monomereinheit zusammengesetzt ist, die ausgewählt ist aus ethylenisch ungesättigten Monomeren und dienungesättigten Monomeren und gleichzeitig 1 bis 10 Hol-% mindestens einer vernetzbaren ungesättigten Monomereinheit enthält, ausgewählt aus carboxylgruppenhaltigen ungesättigten Monomeren, N-Methylol(meth)acrylamid, N-Butoxymethyl(meth)acrylamid, Diacetonacrylamid und Acetoacetoxyethyl(meth)acrylat als ein Dispersoid.

8. Zusammensetzung, die einen Füllstoff mit der wässrigen flüssigen Dispersion nach einem der Ansprüche 1 bis 6 verbindet.

9. Klebstoff, zusammengesetzt aus der wässrigen flüssigen Dispersion nach einem der Ansprüche 1 bis 6 oder der Zusammensetzung nach Anspruch 8.

10. Beschichtungsmaterial, zusammengesetzt aus der wässrigen flüssigen Dispersion nach einem der Ansprüche 1 bis 6 oder der Zusammensetzung nach Anspruch 8.

## Revendications

1. Dispersion dans un liquide aqueux comprenant (A) des particules de polymère composées principalement d'au moins un motif monomère choisi parmi des monomères à insaturation éthylénique et des monomères insaturés diéniques et contenant 0,1 à 10% en poids, par rapport au total des motifs monomères, d'au moins un motif monomère insaturé pouvant être réticulé choisi parmi les monomères insaturés contenant un groupe carboxyle, le N-méthylol-(méth)acrylamide, le N-butoxyméthyl-(méth)-acrylamide, le diacétone-acrylamide et le (méth)-acrylate d'acétoacétoxyéthyle ; (E) un copolymère d'alcool vinylique comportant 1 à 10% en moles d'un motif éthylène et 0,1 à 10% en moles d'un motif monomère contenant un groupe carboxyle ; et (D) un agent de réticulation, dans lequel en ce qui concerne les rapports pondéraux des teneurs en extrait sec, (A)/(E) a une valeur de 99/1 à 80/20 et {(A) + (E)}/(D) a une valeur de 99,9/0,1 à 90/10.

2. Dispersion dans un liquide aqueux selon la revendication 1 dans laquelle les particules de polymère (A) sont des particules de polymère composées principalement d'un motif acétate de vinyle.

3. Dispersion dans un liquide aqueux selon la revendication 1 dans laquelle les particules de polymère (A) sont des particules de polymère comprenant un motif ester vinylique d'un acide gras ramifié à raison de 30% en poids ou moins.

4. Dispersion dans un liquide aqueux selon la revendication 3 dans laquelle le motif ester vinylique de l'acide gras ramifié est un motif versatate de vinyle.

5. Dispersion dans un liquide aqueux selon l'une quelconque des revendications 1 à 4 dans laquelle l'agent de réticulation (D) est au moins un agent choisi parmi les adduits polyamide amine épichlorohydrine, les sels d'aluminium solubles dans l'eau et les résines à base de glyoxal.

6. Dispersion dans un liquide aqueux selon l'une quelconque des revendications 1 à 4 dans laquelle les agents de réticulation (D) sont au moins deux choisis parmi les adduits polyamide amine épichlorohydrine, les sels d'aluminium solubles dans l'eau et les résines à base de glyoxal.

7. Procédé de production d'une dispersion dans un liquide aqueux
**caractérisé par le fait que** l'on combine (D) un agent de réticulation avec une émulsion aqueuse obtenue par polymérisation en émulsion au moyen de (E) un copolymère d'alcool vinylique comportant 1 à 10% en moles d'un motif éthylène et 0,1 à 10% en moles d'un motif monomère contenant un groupe carboxyle en tant que dispersant et au moyen de (A) un polymère composé principalement d'au moins un motif monomère choisi parmi des monomères à insaturation éthylénique et des monomères insaturés diéniques et contenant 1 à 10% en moles d'au moins un motif monomère insaturé pouvant être réticulé choisi parmi les monomères insaturés contenant un groupe carboxyle, le N-méthylol-(méth)acrylamide, le N-butoxyméthyl-(méth)acrylamide, le diacétone-acrylamide et le (méth)acrylate d'acétoacétoxyéthyle en tant que dispersoïde.

8. Composition combinant une charge avec la dispersion dans un liquide aqueux selon l'une quelconque des revendications 1 à 6.

9. Adhésif composé de la dispersion dans un liquide aqueux selon l'une quelconque des revendications 1 à 6 ou de la composition selon la revendication 8.

10. Matériau de revêtement composé de la dispersion dans un liquide aqueux selon l'une quelconque des revendications 1 à 6 ou de la composition selon la revendication 8.
